# EUROPEAN PATENT APPLICATION

(11) **EP 4 729 376 A1**
(43) Date of publication of application: **22.04.2026**
(21) Application number: 24207869.9
(22) Date of filing: 21.10.2024
(51) Int. Cl.: B60T 8/32, B60T 8/17, B60T 8/36, B60T 13/66, B60T 13/68

(54) **ELECTRONIC BRAKE SYSTEM AND METHOD FOR A REDUNDANT PRESSURE CONTROL**

(71) Applicant: KB Intellectual Property GmbH & Co. KG, 82049 Pullach (DE)
(72) Inventor: Wieder, Gerhard, 74354 Besigheim (DE); Hecker, Falk, 71706 Markgröningen (DE); Yildirim, Muhammet, 75417 Mühlacker (DE); Mustapha, Adnan, 75433 Maulbronn (DE)

(57) **Abstract**

An electronic brake system for a commercial vehicle connectable with a trailer is disclosed. The electronic brake system comprises a foot brake module, FBM, (100), a pressure control module, PCM, (200), and a trailer control valve, TCV, (300). The FBM (100) comprises a pneumatic output port (110) and an input interface (130) for receiving a brake request. The FBM (100) is configured to generate a control pressure (101) at the pneumatic output port (110) based on the brake request. The PCM (200) comprises a first channel port (210), a second channel port (220), and a pneumatic backup port (230). The first channel port (210) is configured to provide a first channel output (201). The second channel port (220) is configured to provide a second channel output (202). The pneumatic backup port (230) is fluidly connectable to the first channel port (210) and/or to the second channel port (220) to provide a pneumatic backup brake control based on the control pressure (101). The TCV (300) comprises a pneumatic input port (310), an electronic input port (320), and a pressure sensor (330). The pneumatic input port (310) is connected with the pneumatic output port (110) of the FBM (100) to control pneumatically a brake pressure of the trailer in a primary mode. In a secondary mode, the TCV (300) is configured to control the brake pressure of the trailer based on an electronic brake signal (150) at the electronic input port (320) and utilizing the pressure sensor (330) to set the brake pressure of the trailer to a target value. The electronic brake signal (150) is an external brake request or is generated by the FBM (100)

## Description

The present invention relates to an electronic brake system and a method for a redundant pressure control and, in particular, to a cost-effective electronic brake system with and without a trailer control.

Commercial vehicles are required to have two brake circuits that are separated from each other. For example, one circuit controls the front axle and one the rear axle. Electronic brake systems, EBS, control electronically a brake pressure at axles or wheels utilizing at least one electronic pressure module (or electro pneumatic modulator), EPM. In an EBS system, the driver's request is determined electronically by means of a position or stroke sensor in a foot brake module (FBM) and is transmitted to a braking algorithm to calculate the target pressures which is transmitted electronically to pressure control units to apply the target pressure to brake cylinders at the wheels.

Conventional EBSs include, in addition to the electronic control channel, two independent pneumatic control channels to provide two control pressures for the two independent circuits as backup control when the electronic control of the EBS exhibits a failure (e.g. a malfunctioning of one component). Moreover, conventional EBSs have an EPM at the front axle and an EPM for the rear axle(s). A possibly coupled trailer (e.g. semi-trailer or drawbar trailer) is controlled in conventional EBSs by a Trailer Control Module (TCM), which integrates an electronic pressure control and a parking brake function for the trailer, wherein the conventional TCMs have two pneumatic control circuits for the service brake.

Due to the multiple control circuits, these conventional EBSs are expensive. Thus, there is a demand for an electronic brake system that overcomes these disadvantages, i.e. fulfills the regulatory requirements, while relying on less expensive components and are easily to implement (e.g., use available components on vehicle) and do not need additional installation space.

At least some of these problems are overcome by an electronic brake system of claim 1 or a method according to claim 13. The dependent claims refer to further advantageous realizations of the subject matters of the independent claims.

The present invention relates to an electronic brake system, EBS, for a commercial vehicle that can be coupled to a trailer. The electronic brake system comprises a foot brake module, FBM, a pressure control module, PCM, and a trailer control valve, TCV. The FBM comprises a pneumatic output port and an input interface for receiving a brake request. The FBM is configured to generate a control pressure at the pneumatic output port based on the brake request. The PCM comprises a first channel port, a second channel port, and a pneumatic backup port. The first channel port is configured to provide a first channel output. The second channel port is configured to provide a second channel output. The pneumatic backup port is fluidly connectable to the first channel port and/or to the second channel port to provide a pneumatic backup brake control based on the control pressure. The TCV comprises a pneumatic input port, an electronic input port, and a pressure sensor. The pneumatic input port is connected with the pneumatic output port of the FBM to control pneumatically a brake pressure of the trailer in a primary mode. In a secondary mode, the TCV is configured to control the brake pressure of the trailer based on an electronic brake signal at the electronic input port. For this, the pressure sensor is utilized to set the brake pressure of the trailer to a target value. The electronic brake signal can be an external brake request or can be generated by the FBM.

In this disclosure, the term "connected" shall be construed broadly and include a fluid connection to provide a pneumatic channel for compressed air (control pressure or supply pressure) which, however, can be closed or opened by valves. The secondary mode may be a backup mode which may be employed in the event of any failure or insufficiency in the primary mode. Embodiments may use a corresponding detector for detecting a malfunctioning. The external brake request may originate from anti-lock brake system (ABS), an electronic stability program (ESP), an adaptive cruise control (ACC), a hill-start aid (HSA) or any other controller or electronic control unit, ECU, in the vehicle. For this, the EBS may comprise an interface to a vehicle network (e.g. a CAN) for receiving the external brake request(s). In addition, the EBS may couple to a brake controller (e.g. using the network interface) or may itself comprise a brake controller. For example, one of the components of the EBS may have a controller which may be used as a possible brake controller. The brake controller may be adapted to implement the electronic control (e.g. by generating the electronic control signal(s)).

Optionally, the TCV comprises a relay valve with a control port, a first solenoid valve, a second solenoid valve, and a pressure supply port. The first solenoid valve and/or the second solenoid valve are configured to forward, in the primary mode, the control pressure to the control port of the relay valve. Optionally, the first solenoid valve and/or the second solenoid valve are configured to interrupt, in the secondary mode, the control pressure and to connect instead the control port of the relay valve to the pressure supply port. This may be based on or triggered by the electronic brake signal and an actual pressure sensed by the pressure sensor.

Optionally, the first solenoid valve is a monostable hold valve (e.g. 2/2-valve) to open and/or close the pneumatic input port. Optionally, the second solenoid valve is a monostable apply valve (e.g. a 3/2-valve or a 2/2-valve) to open and/or close the pressure supply port. The first solenoid valve and the second first solenoid valve may be arranged in a serial or parallel connection.

Optionally, the trailer control valve further comprises a parking brake input port for receiving a parking brake request. The parking brake input port may be adapted to activate the relay valve to provide a parking brake function for the trailer. The parking brake function may activate the brake at the trailer independently from the activation at the pneumatic input port (i.e. independently from the received control pressure, e.g. from the FBM).

Optionally, the commercial vehicle includes a front axle and at least one rear axle (e.g. a truck, towing vehicle, bus etc.). Then, the first channel port may be configured to provide the first channel output for one side of the at least one rear axle and the second channel port may be configured to provide the second channel output for the other side of the at least one rear axle. The EBS may further comprise a front axle modulator with an input port and a relay valve with a control port connected to the input port to control a brake pressure on the front axle. The input port may be (fluidly) connected with the pneumatic output port of the FBM. Therefore, the EBS provides two separate brake circuits, a first brake circuit may serve the front axle, and a second brake circuit may serve the rear axle(s).

Optionally, the front axle modulator includes a pressure supply port, a first solenoid valve (e.g. 2/2-valve) to open and/or close the input port. Optionally, the front axle modulator includes a second solenoid valve (e.g. a 3/2- or a 2/2-valve) to open and/or close the pressure supply port. The first solenoid valve and/or the second first solenoid valve may be arranged as a serial connection or as a parallel connection. The first solenoid valve and/or the second first solenoid valve may be configured to forward, in the primary mode, the control pressure to the control port of the relay valve. The first solenoid valve and/or the second first solenoid valve may be configured to interrupt, in the secondary mode, the control pressure and to connect the control port of the relay valve to the pressure supply port based on a received electronic brake signal.

Optionally, the front axle modulator includes a pressure sensor to determine a brake pressure provided to the brake cylinders, wherein the EBS is adapted to control the brake pressure at the front axle electronically by utilizing the pressure sensor in combination with the first solenoid valve and/or the second solenoid valve to set a target pressure value.

Optionally, the PCM includes an electronic controller which is configured to receive the electronic brake signal and to generate a target pressure at the first channel output and/or at the second channel output based on the electronic brake signal. This may be the primary operation mode, wherein the target pressure(s) may be adjusted utilizing sensed pressures by pressure sensors.

It is understood that the electronic brake signal may be specific for the different brake circuits and/or for the trailer (because the applied brake force shall differ). Nevertheless, the present disclosure refers to these possibly different electronic brake signals commonly as the electronic brake signal. According to embodiments, the electronic brake signal may be constituted by a plurality of signals, e.g. for each axle, or for each channel or for the tailer a separate signal. All these signals can be distributed via the vehicle network.

Optionally, the PCM is further configured to connect the pneumatic backup port with the first channel port only when the electronic controller is unable to generate the first channel output based on the electronic brake signal. Similarly, the PCM may be further configured to connect the pneumatic backup port with the second channel port only when the electronic controller is unable to generate the second channel output based on the electronic brake signal. This failure may also lie in another component (not in the PCM) and a corresponding notification may be distributed. For example, the electronic brake signal may be insufficient or erroneous (e.g. because the FBM is malfunctioning). But also then, the result is a wrong first/second channel output.

Optionally, the PCM further includes a first pressure sensor for sensing a pressure at the first channel port, and/or a second pressure sensor for sensing a pressure at the second channel port, and/or a first relay valve and/or a second relay valve, and/or an inlet for a second supply pressure. The first relay valve may then be configured to provide a first target brake pressure for the first channel port utilizing the second supply pressure and the first pressure sensor. The second relay valve may then be configured to provide a second target brake pressure for second channel port utilizing the second supply pressure and the second pressure sensor.

Optionally, the FBM includes a stroke sensor adapted to determine an actuation level of the input interface by a driver (e.g. a position sensor for a brake pedal) and to generate the electronic brake signal based on the determined actuation level and based on a characteristic signal curve. The EBS may be adapted to modify the characteristic signal curve by an offset to lower a pressure level for the control pressure associated with a desired braking effect. This will increase an available pressure range in the TCL and/or the front axle modulator. In particular for the electronic control mode (e.g. the backup mode), this option may be utilized to have a wider range for lowering the pressure by the solenoid valves in the TCL and/or front axle modulator (because the pressure input is the lowest available pressure).

Optionally, the brake system further comprises at least one of the following:
- a first air reservoir for supplying a first supply pressure to the FBM and to the front axle modulator,
- a second air reservoir for supplying the second supply pressure to the PCM,
- a third air reservoir for providing a third supply pressure as pressure supply for the TCV,
- one or more wheel speed sensors for determining one or more respective wheel speeds at the front axle and/or wheel speeds at the at least one rear axle,
- one or more brake pad wear sensors for determining one or more respective brake pad wear values at the front axle and/or at the at least one rear axle,
- one or more pressure control valves, PCV, at the front axle, each PCV is configured to adjust a pressure at a respective wheel.

Embodiments relate also to a vehicle, in particular, to a commercial vehicle connectable with a trailer (e.g., a truck, a tractor, a bus, a towing vehicle, a vehicle combination etc.), which includes a brake system as described in this disclosure.

Embodiments relate also to a method for controlling a trailer brake pressure or a redundant pressure control in a commercial vehicle. The method comprises:
- receiving, by a foot brake module, FBM, a brake request,
- generating a control pressure at a pneumatic output port of the FBM based on the brake request;
- providing, by a pressure control module, PCM, a first channel output at a first channel port and a second channel output at a second channel port; and
- controlling, by a trailer control valve, TCV, pneumatically a brake pressure of the trailer, in a primary mode, by the control pressure and, in a secondary mode, controlling the brake pressure of the trailer based on an electronic brake signal to set a target value, the electronic brake signal can be an external brake request or may be generated by the FBM.

Optionally, the steps of providing and of controlling are performed as a primary mode or operation. If a malfunctioning prevents the primary mode of operation, a secondary mode of operation can be initiated which includes the steps of:
- pneumatically connecting a pneumatic backup port of the PCM with the first channel port and/or with the second channel port;
- providing a pneumatic backup brake control based on the control pressure (from the FBM).

Embodiments provide a cost-efficient EBS by replacing a conventional pneumatic TCV by a pneumatic TCV which is supplemented by an electronic control option as backup brake control, and which uses an additional pressure sensor to provide a desired target pressure. This provides the advantage that an FBM with only one pneumatic channel can be used - instead of the more expensive pneumatic two-channel FBMs. A further advantage relates to the fact that the TCV does not need to have any controller but can nevertheless provide an electronic backup control option. This, in turn, provides the advantage that the TCV does not need to have two pneumatic channels. Embodiments make use of these advantages.

Some examples of the brake system and/or methods will be described in the following by way of examples only, and with respect to the accompanying figures, in which:
- Fig. 1: depicts an electronic brake system according to an embodiment of the present invention.
- Fig. 2: depicts further details of the electronic brake system for a commercial vehicle according to embodiments.
- Fig. 3: depicts an embodiment for the supplementary electronic control of the trailer control valve and/or of the front axle modulator.
- Fig. 4: shows a schematic flow chart for a method of controlling a brake pressure according to embodiments.

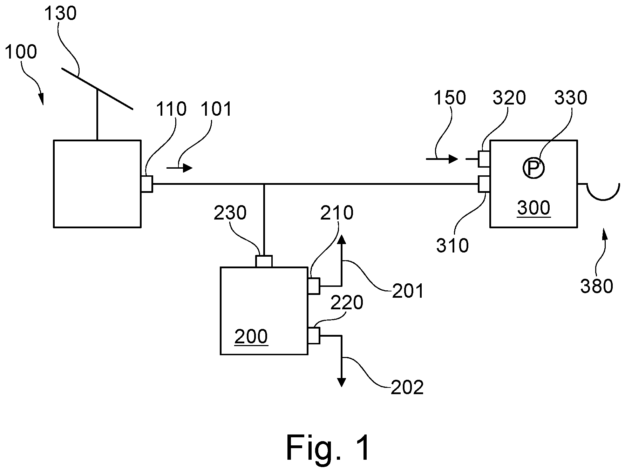

**Fig. 1** depicts an electronic brake system, EBS, according to an embodiment which is adapted to be used in a commercial vehicle such as a (long-haul) truck, a towing vehicle (with or without a trailer), a bus etc. The EBS comprises a foot brake module, FBM, 100 a pressure control module, PCM, 200, and a trailer control valve, TCV, 300. The FBM 100 comprises a pneumatic output port 110 and an input interface 130 for receiving a brake request.

The FBM 100 generates a control pressure 101 at the pneumatic output port 110 based on the brake request (e.g. based on an actuation of the driver). The PCM 200 comprises a first channel port 210, a second channel port 220, and a pneumatic backup port 230. The first channel port 210 provides a first channel output 201, the second channel port 220 provides a second channel output 202, the pneumatic backup port 230 can be fluidly connected to the first channel port 210 and/or to the second channel port 220 to provide a pneumatic backup brake control based on the control pressure 101 (from the FBM 100).

The TCV 300 comprises a pneumatic input port 310, an electronic input port 320, a pressure sensor 330, and an output 380 for a trailer (may have trailer coupling terminals) that may be coupled to the commercial vehicle. The pneumatic input port 310 is connected with the pneumatic output port 110 to control pneumatically a brake pressure of the trailer in a primary mode. In a secondary mode (e.g. the backup mode), the TCV 300 is adapted to control the brake pressure of the trailer based on one or more electronic brake signals 150 at the electronic input port 320, wherein the pressure sensor 330 can be utilized to set the brake pressure to a desired target value.

The electronic brake signal(s) 150 can be an external brake request or can be generated by the FBM 100, wherein the external brake request can be sent from vehicle systems such as a driving stability function (e.g. ESP, TCS, ABS) or an assist system (e.g. ACC, HSA). The FBM 100 may generate the electronic brake signal(s) based on an actuation of a brake pedal by the driver. Also, an autonomous driving system may generate the electronic brake signal(s).

Thus, according to embodiment, the cost effective EBS brake system is realized by replacing a pneumatic two-channel FBM and a one-channel FBM 100 with only one pressure control circuit. The FBM 100 thus provides only a single pneumatic circuit and one electric circuit. Significant costs can be saved by not forming the second pneumatic circuit (pneumatic lines and less valve components are needed in the FBM). Same is true for the TCL, where embodiments save also one pneumatic channel and form instead electronic backup channel (using the integrated solenoids).

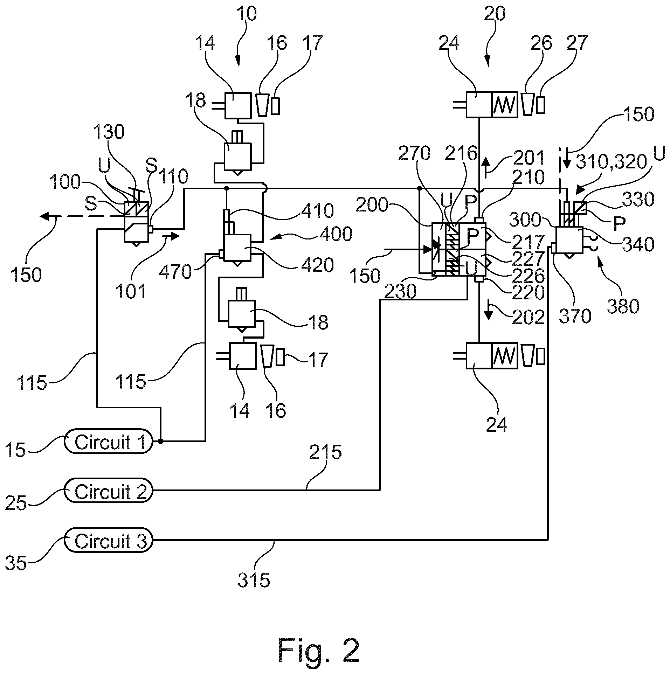

**Fig. 2** depicts further details of embodiments for the implementation of the EBS of Fig. 1 in a commercial vehicle. The exemplary commercial vehicle has at least one front axle 10 (e.g. steered axle) with brake cylinders 14 (on both sides) and at least one rear axle 20 (e.g. driven axle) with respective brake cylinders 24 (on both sides). Each brake cylinder 14, 24 or each wheel may be equipped with a respective wheel speed sensors 16, 26 for determining respective wheel speeds at the front axle(s) 10 and/or the at least one rear axle 20. In addition, brake pad wear sensors 17, 27 are installed for determining respective brake pad wear values at the front axle(s) 10 and/or the at least one rear axle 20.

According to the depicted embodiment, the EBS further comprises a first air reservoir 15 for supplying a first supply pressure 115 to the FBM 100, a second air reservoir 25 for supplying the second supply pressure 225 to the PCM 200, a third air reservoir 35 for providing a third supply pressure 235 as pressure supply for the TCV 300.

According to the depicted embodiment, the EBS further comprises a front axle modulator 400 with an input port 410 and a relay valve 420 connected with the first supply pressure 115 from the first air reservoir 15. The input port 410 is connected with the pneumatic output port 110 of the FBM 100 to control a brake pressure at the brake cylinders 14 on the front axle(s) 10. In addition, pressure control valves, PCV, 18 are installed on each side of the at the front axle 10 between the front axle modulator 400 and the respective brake cylinders 14.

However, at the rear axle(s) 20 no PCVs are installed. Instead, the first channel output 201 is provided for the brake cylinder 24 on one side the rear axle 20 and the second channel output 202 is provided for the brake cylinder 24 on the other (opposite) side of the rear axle 20. Thus, the PCM 200 controls the brake pressure on the rear axle(s) 20. For this, the PCM 200 includes an electronic controller 270 configured to receive the electronic brake signal(s) 150 and to generate target pressures as the first channel output 201 and/or as the second channel output 202 based on the electronic brake signal(s) 150.

The PCM 200 may further include a first pressure sensor 216 for sensing a pressure at the first channel port 210, a second pressure sensor 226 for sensing a pressure at the second channel port 220, a first relay valve 217, a second relay valve 227, and an inlet for the second supply pressure 215. The first relay valve 217 may provide a first target brake pressure (as first channel output 201) for the first channel port 210 utilizing the second supply pressure 215 and the first pressure sensor 216. The second relay valve 227 may provide a second target brake pressure (as second channel output 202) for second channel port 220 utilizing the second supply pressure 215 and the second pressure sensor 226.

Moreover, embodiments enable stability systems such as ABS and/or ESP and/or TCS to perform wheel-individual interventions (brake actuations), for which the determined wheel speed information can be used. To set a desired brake value, the PCVs 18 at the front axle 10 can be used and at the rear axle(s) 20 the electronic controller 270 can set separately brake pressure values at the rear brake cylinders 24 on both side by using the two independent channels (first channel output 201 and/or the second channel output 202).

Thus, embodiments implement two separate brake circuits, a first brake circuit for the front axle 10 utilizing the front axle modulator 400 and a second brake circuit for rear axle 20 utilizing the PCM 200.

In addition to the described electronic control, embodiment allow for pneumatic control at the rear axle(s). For this, the PCM 200 is configured to connect the pneumatic backup port 230 with the first channel port 210 and/or with the second channel port 220. This option may be applied as backup, or in other word, only when the electronic controller 270 is unable to generate the first channel output 201 and/or the second channel output 202, the pneumatic backup port 230 will be enabled. For example, the PCM 200 may comprise a respective the valve which opens the connection to the first/second channel port 210, 220. The pneumatic control pressure 101 may always be generated by FBM 100.

The front axle modulator 400 as well as the TCV 300 allow for two independent, redundant operational modes. Like the front axle modulator 400, also the TCV 300 includes a relay valve 340 which in the primary mode of operation may be controlled pneumatically by the control pressure 101 received from the FBM 100. The relay valves 340, 420 in the front axle modulator 400 and the TCV 300 amplify the air volume to provide a sufficient brake effect in the brake cylinders 14 and the trailer, resp. The relay valve 340 of the TCV 300 is therefore arranged between the third pressure supply 315 received at a pressure supply port 370 and trailer coupling terminals 380. Whereas the front axle modulator 400 does not need a pressure sensor (because the PCV 18 may control pressure values), the TCV 300 includes (or has access to) a pressure sensor 330, which is utilized in the secondary mode of operation that is explained in more detail in the following. However, optionally, also the front axle modulator comprises a pressure sensor.

The trailer control valve may comprise a parking brake function and a correspond input port for receiving a parking brake request. Thus, there may be three input ports: one pneumatic 310, one for electronic signals 320 and one a parking brake input. The parking brake input may be adapted to activate the relay valve 340 to provide a parking brake function for the trailer. The parking brake function may activate the brake at the trailer independently from the activation at the pneumatic input port (i.e. independently from the received control pressure, e.g. from the FBM).

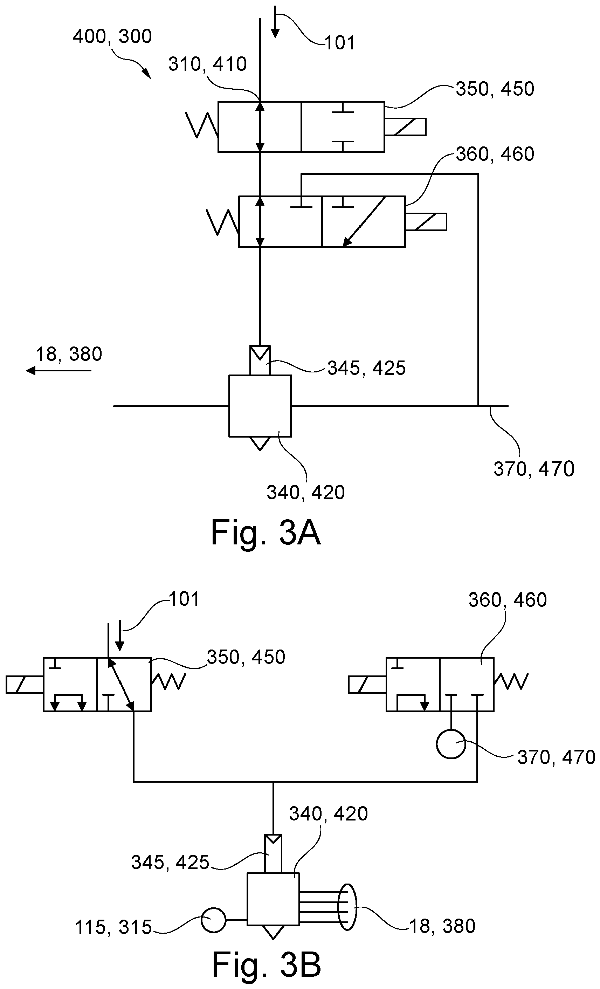

**Fig. 3A, 3B** depict embodiments for the supplementary electronic control of the TCV 300 and/or of the front axle modulator 400.

Both, the TCV 300 and the front axle modulator 400 allow the above-described pneumatic control, where the control pressure 101 from the FBM 100 is used as control for the relay valves 340, 420. This may be used as primary mode of operation. A secondary (backup) mode of operation may be implemented as an electronic control. For this, the TCV 300 and/or front axle modulator 400 includes a first solenoid valve 350, 450 to open and/or to close the respective input port 310, 410, and a second solenoid valve 360, 460 to open and/or to close the respective pressure supply port 370, 470 (for the third/first supply pressure 315, 115). The first solenoid valve 350, 450 (e.g. formed as 2/2-valve) and the second solenoid valve 360 460 may arranged as a serial connection (see **Fig. 3A**) or as a parallel connection (see **Fig. 3B**). In the serial connection of **Fig. 3A** the second solenoid valve 360, 460 is formed as a 3/2-valve. In parallel connection of **Fig. 3B** the second solenoid valve 360, 460 is likewise formed as a 2/2-valve.

The first solenoid valve 350, 450 may be a monostable valve, where the open state is the default stable position (e.g. when no electric signal is applied). Likewise, the second solenoid valve 360, 460 may be a monostable, where the open state is the default stable position (e.g. when no electric signal is applied). In this setting, the pneumatic control is the primary mode of operation. The first solenoid valve 350, 450 may act as a hold valve to decouple the pneumatic input port 310, 410 and to hold the state of the relay valve 340, 420 (when the second solenoid 360, 460 remains in its position). The second solenoid valve 360, 460 may be an apply valve that applies the pressure supply 115, 315 to the relay valve 340, 420 and thus activates the pressure volume increase at the brake cylinders 14 or the trailer coupling terminals 380. The hold state may be used to brake the trailer independently of an actuation of the driver (e.g. as stretch braking) whereas the apply state may be utilize to set a predetermined braking force during a stop (e.g. to keep the vehicle combination at a standstill).

The first solenoid valve 350, 450 and the second solenoid valve 360, 460 may be controlled by a controller (e.g. a brake control unit), which may set the brake pressure at the brake cylinders 14 or at the trailer coupling terminals 380 based on the electronic brake signals 150 (i.e. an actuation level of the FBM 100 or the external brake request). The controller can be external, i.e. the front axle modulator 400 as well as the TCL 300 do not need to have an own controller.

Thus, according to embodiments, the front axle modulator 400 with its pneumatic relay valve 420 has an integrated double-magnetic valve (first and second solenoids 350, 360) and allows various functions:
- brake pressure control by the driver,
- a pressure increase from the system,
- blocking or hold function from the system,
- release the pressure to the level of the input pressure from driver.

The solenoid valves 450, 460 control the pressure of the relay piston and thus control the pressure valve at the axle pressure without using the PCVs 18. Because an exhaust port is missing in the front axle modulator 400 and the TCL 300, the pressure set by the driver through the input interface 130 represents a lower limit for the pressure applicable at the control port of the relay valve 420. Same applies for the trailer brake pressure controlled by the TCV 300 with uses the same valve arrangement. Like conventional TCV, the TCV 300 may have an integrated park brake function, but has only a single-circuit pneumatic service brake function. Unlike conventional trailer control valves or trailer control module, embodiments do not have two independent pneumatic service brake functions.

The FBM 100 may be formed as in Fig. 1, which also has only a single pneumatic channel and a stroke sensor to measure the driver brake request and to generate an electronic brake signal 150.

On the other hand, the PCM 200 includes an integrated central controller 270 (an electronic control unit, ECU) and includes a two-channel pressure modulator.

Embodiments thus provide all functions of an electronic brake system. In particular, also an external brake requests (e.g. from adaptive cruise control, ACC, or an hillstart aid, HSA), which often request axle or trailer brake pressure can be handled. Likewise, ESP interventions to brake the vehicle itself selectively and/or the trailer can be processed, accordingly. For load dependent brake force, the PCM 200 at the rear axle 20 can be used.

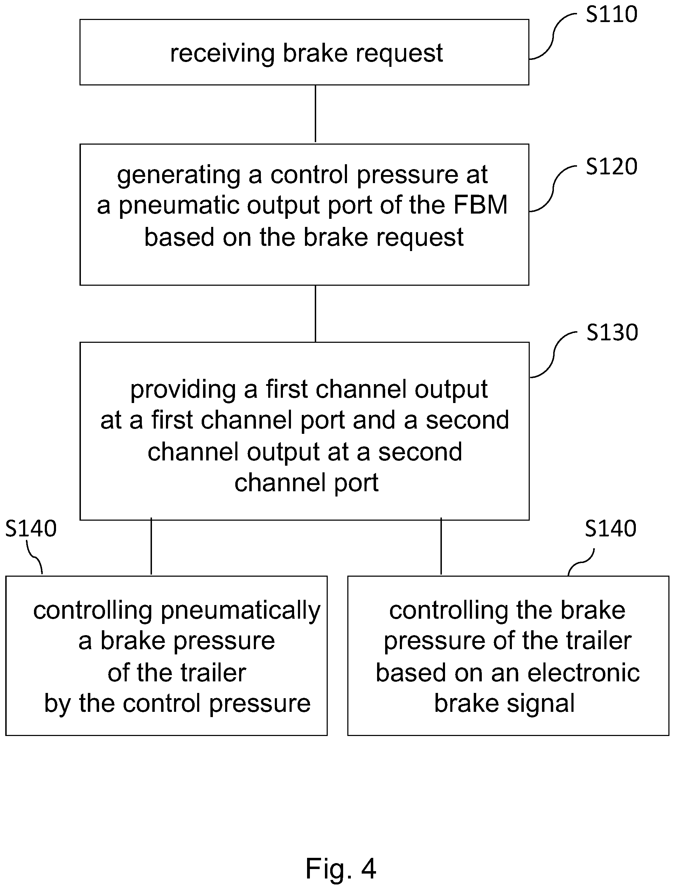

**Fig. 4** depicts a schematic flow diagram of a method for controlling a trailer brake pressure in a commercial vehicle. The method comprises the steps of:
- receiving S110, by a FBM 100, brake request,
- generating S120 a control pressure 101 at a pneumatic output port 110 of the FBM 100 based on the brake request;
- providing S130, by a PCM 200, a first channel output 201 at a first channel port 210 and a second channel output 202 at a second channel port 220; and
- controlling S140, by a TCV 300, pneumatically a brake pressure of the trailer, in a primary mode, by the control pressure 101 and, in a secondary mode, controlling the brake pressure of the trailer based on an electronic brake signal 150 to a target value, wherein the electronic brake signal 150 is an external brake request or is generated by the FBM 100.

The steps of providing S130 and of controlling S140 may be performed as a primary mode. However, if a malfunctioning prevents the primary mode of operation, the secondary mode of operation including the steps:
- pneumatically connecting a pneumatic backup port 230 of the PCM 200 with the first channel port 210 and/or with the second channel port 220;
- providing a pneumatic backup brake control based on the control pressure 101.

Embodiments provide the following advantageous technical effects:
Embodiments provide a separation of different brake circuits. The circuits are protected in that a failure in one circuit (e.g. at the front axle modulator 400) still allows to control the trailer pressure accurately. For this, the TCV 300 can use its pressure sensor 300 and is connected to the third supply pressure 315 which is different from the supply pressure provided at the front axle 10 and allows to set the trailer pressure accordingly - even though the brake circuit at the front axle 10 has a failure.

Connected supply circuits may also be used to realize a second circuit in the trailer control.

The front axle modulator 400 is mainly controlled with pneumatic control line pressure (control pressure 101) from the FBM 100. For the electronic control, the first and second solenoids 450, 460 are used to provide pressure to the front axle 10 (i.e. for ESP, HSA).

The novel TCV 300 is another part of the cost-effective electronic brake system. The trailer control pressure is mainly controlled (as primary operation mode) with pneumatic control line pressure (the control pressure 101) from the FBM 100. For electronic control of the first and/or the second solenoids 450, 460 of the TCV 300 are used to provide pressure to the trailer control line, e.g. as backup or secondary operation mode when there is failure in pneumatic control. The electronic control can be used for ESP, HSA and other assist functions. It may also be used as a backup for failure in the pneumatic control circuit from the FBM 100. For this, the additional pressure sensor 330 can be employed to realize a closed loop control of the electronic pressure (a so-called 1-electronic-circuit). On one side, this realizes the second control circuit for the trailer and, on the other side, replaces the second pneumatic circuit which is used in conventional TCVs. Therefore, the brake system mainly controls (e.g. in primary mode of operation) the vehicle or the vehicle combination (with a trailer) with the pneumatic control pressure at front axle 10 and the trailer. The rear axle(s) 20 can be controlled electronically as the primary mode of operation (e.g. utilizing the electronic controller 270 and solenoid valve comprised in the PCM 200).

According to further embodiments, the TCV 300 can control the trailer mainly in electronic control mode. However, for this, the pressure is limited on the control pressure from the FBM 100 (i.e. the driver brake application), because the TCV 300 cannot actively exhaust air (see Fig. 3A and Fig. 3B), but can only increase the pressure to the trailer compared to the input from FBM 100 (control pressure 101).

According to further embodiments, the front axle modulator 400 comprises an additional pressure sensor to measure an axle pressure and to control the front axle pressure mainly in electronic mode (e.g. a primary mode of control). With this the system, the pressure at the front axle 10 can deliberately be set differently or higher than the pressure at FBM 100 (e.g. the control pressure 101) and/or at the rear axle. This allow a load-dependent braking, in particular at the rear axle(s) 20.

According to further embodiments, the electric signal characteristic curve of the stroke or position sensor in the FBM 100 could create a predominant or higher signal for the calculated output pressure 101 in a way that the FBM 100 pneumatic pressure is smaller than the usual pressure in the axle or trailer. Thus, embodiments allow a pressure offset in the characteristic curve which is used to determine the output pressure (or the control pressure 101). Thus, the FBM 100 can output a lower control pressure 101 to achieve the same braking effect. As consequence, the first and second solenoids 350, 360, 450, 460 can decrease the pressure to a lower level. The available pressure bandwidth (or control range) is thus increased by this offset in the characteristic curve. Thus, an increased pressure range in which the front axle modulator 400 and/or the TCV 300 is achieved.

The description and drawings merely illustrate the principles of the disclosure. It will thus be appreciated that those skilled in the art will be able to devise various arrangements that, although not explicitly described or shown herein, embody the principles of the disclosure and are included within its scope.

Functions of various elements shown in the figures may be provided through the use of dedicated hardware as well as hardware capable of executing software in association with appropriate software. Moreover, any entity described herein as "device", may correspond to or be implemented as "one or more modules", "one or more devices", "one or more units", etc. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included.

It should be appreciated by those skilled in the art that any block diagrams herein represent conceptual views of illustrative circuitry embodying the principles of the disclosure. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Furthermore, the following claims are hereby incorporated into the Detailed Description, where each claim may stand on its own as a separate example. While each claim may stand on its own as a separate example, it is to be noted that - although a dependent claim may refer in the claims to a specific combination with one or more other claims - other examples may also include a combination of the dependent claim with the subject matter of each other dependent or independent claim. Such combinations are proposed herein unless it is stated that a specific combination is not intended. Furthermore, it is intended to include also features of a claim to any other independent claim even if this claim is not directly made dependent to the independent claim.

It is further to be noted that methods disclosed in the specification or in the claims may be implemented by a device having means for performing each of the respective acts of these methods. Further, it is to be understood that the disclosure of multiple acts or functions disclosed in the specification or claims may not be construed as to be within the specific order. Therefore, the disclosure of multiple acts or functions will not limit these to a particular order unless such acts or functions are not interchangeable for technical reasons. Furthermore, in some examples a single act may include or may be broken into multiple sub acts. Such sub acts may be included and part of the disclosure of this single act unless explicitly excluded.

Furthermore, while each embodiment may stand on its own as a separate example, it is to be noted that in other embodiments the defined features can be combined differently, i.e. a particular feature descripted in one embodiment may also be realized in other embodiments. Such combinations are covered by the disclosure herein unless it is stated that a specific combination is not intended.

### LIST OF REFERENCE SIGNS

- 10: front axle
- 14: front brake cylinders
- 16, 26: wheel speed sensors
- 17, 27: brake pad wear sensors
- 18: pressure control valve(s)
- 20: at least one rear axle
- 24: rear brake cylinders
- 100: foot brake module (FBM)
- 101: control pressure
- 110: pneumatic output port
- 115,215,315: pressure supply
- 130: input interface
- 150: electronic brake signal
- 200: pressure control module (PCM)
- 201: first channel output
- 202: second channel output
- 210: first channel port
- 220: second channel port
- 216,226: pressure sensors
- 217,227: relay valves
- 215: second supply pressure,
- 230: pneumatic backup port
- 270: electronic controller
- 300: trailer control valve (TCV)
- 310: pneumatic input port
- 320: electronic input port
- 330: pressure sensor
- 340: relay valve
- 345: control port (of relay valve)
- 350: first solenoid valve
- 360: second solenoid valve
- 370: pressure supply port
- 400: front axle modulator
- 410: input port
- 420: relay valve
- 425: control port
- 450: first solenoid valve
- 460: second solenoid valve
- 470: pressure supply port

## Claims

1. An electronic brake system for a commercial vehicle connectable with a trailer, **characterized by:**
- a foot brake module, FBM, (100) comprising a pneumatic output port (110) and an input interface (130) for receiving a brake request, the FBM (100) being configured to generate a control pressure (101) at the pneumatic output port (110) based on the brake request;
- a pressure control module, PCM, (200) with a first channel port (210), a second channel port (220), and a pneumatic backup port (230), the first channel port (210) being configured to provide a first channel output (201), the second channel port (220) being configured to provide a second channel output (202), the pneumatic backup port (230) is fluidly connectable to the first channel port (210) and/or to the second channel port (220) to provide a pneumatic backup brake control based on the control pressure (101); and
- a trailer control valve, TCV, (300), with a pneumatic input port (310), an electronic input port (320), and a pressure sensor (330), the pneumatic input port (310) is connected with the pneumatic output port (110) of the FBM (100) to control pneumatically a brake pressure of the trailer in a primary mode, and, in a secondary mode, the TCV (300) is configured to control the brake pressure of the trailer based on an electronic brake signal (150) at the electronic input port (320) and utilizing the pressure sensor (330) to set the brake pressure of the trailer to a target value, the electronic brake signal (150) being an external brake request or being generated by the FBM (100).

2. The electronic brake system according to claim 1, wherein the TCV (300) comprises a relay valve (340) with a control port (345), a first solenoid valve (350), a second solenoid valve (360), and a pressure supply port (370), the first solenoid valve (350) and the second solenoid valve (360) are configured to
- forward, in the primary mode, the control pressure (101) to the control port (345) of the relay valve (340), and/or
- interrupt or to open, in the secondary mode, the connection to the control pressure (101) and to connect the control port (345) of the relay valve (340) to the pressure supply port (370) based on the electronic brake signal (150) and an actual pressure sensed by the pressure sensor (330).

3. The electronic brake system according to claim 2, wherein the first solenoid valve (350) is a monostable hold valve to open and close the pneumatic input port (310), and the second solenoid valve (360) is a monostable apply valve to open and close the pressure supply port (370), and the first solenoid valve (350) and the second first solenoid valve (360) are arranged in a serial or parallel connection.

4. The electronic brake system according any one of claims 1 to 3, wherein the commercial vehicle includes a front axle (10) and at least one rear axle (20), the first channel port (210) is configured to provide the first channel output (201) for one side of the at least one rear axle (20) and the second channel port (220) is configured to provide the second channel output (202) for the other side of the at least one rear axle (20),
the electronic brake system further comprising a front axle modulator (400) with an input port (410) and a relay valve (420) with a control port (425) connected to the input port (410) to control a brake pressure on the front axle (10), wherein the input port (410) is connected with the pneumatic output port (110) of the FBM (100).

5. The electronic brake system according to claim 4, wherein the front axle modulator (400) includes a pressure supply port (470), a first solenoid valve (450) to open and close the input port (410), and a second solenoid valve (460) to open and close the pressure supply port (470), wherein the first solenoid valve (450) and the second first solenoid valve (460) are arranged as a serial connection or as a parallel connection and are configured to
- forward, in the primary mode, the control pressure (101) to the control port (425) of the relay valve (420), and
- interrupt, in the secondary mode, the control pressure (101) and to connect the control port (425) of the relay valve (420) to the pressure supply port (470) based on the electronic brake signal (150).

6. The electronic brake system according to claim 5, wherein the front axle modulator (400) includes a pressure sensor to determine a brake pressure provided to the brake cylinders (14), wherein the EBS is adapted to control the brake pressure at the front axle (10) electronically by utilizing, the pressure sensor in combination with the first solenoid valve (450) and the second solenoid valve (460) to set a target pressure value.

7. The electronic brake system according to any one of claims 1 to 6, wherein the PCM (200) includes an electronic controller (270) configured to receive the electronic brake signal (150) and to generate a target pressure at the first channel output (201) and/or at the second channel output (202) based on the electronic brake signal (150).

8. The electronic brake system according to claim 7, wherein the PCM (200) is further configured to connect the pneumatic backup port (230) with the first channel port (210) and/or with the second channel port (220) only when the electronic controller (270) is unable to generate the first channel output (201) and/or the second channel output (202) based on the electronic brake signal (150).

9. The electronic brake system according to claim 7 or claim 8, wherein the PCM (200) further includes a first pressure sensor (216) for sensing a pressure at the first channel port (210), a second pressure sensor (226) for sensing a pressure at the second channel port (220), a first relay valve (217), a second relay valve (227), and an inlet for a second supply pressure (215),
wherein the first relay valve (217) is configured to provide a first target brake pressure for the first channel port (210) utilizing the second supply pressure (215) and the first pressure sensor (216), and/or
wherein the second relay valve (227) is configured to provide a second target brake pressure for second channel port (220) utilizing the second supply pressure (215) and the second pressure sensor (226).

10. The electronic brake system according to any one of claims 1 to 9, wherein the FBM (100) includes a stroke sensor adapted to determine an actuation level of the input interface (130) by a driver and to generate the electronic brake signal (150) based on the determined actuation level and on a characteristic signal curve,
wherein the electronic brake system is adapted to modify the characteristic signal curve by an offset to lower a pressure level for the control pressure (101) associated with a desired braking effect and thus to increase an available pressure range in the TCV (300) and the front axle modulator (400) as claimed in claim 5.

11. The brake system according to any one of claims 4 to 10, further comprising at least one of the following:
- a first air reservoir (15) for supplying a first supply pressure (115) to the FBM (100) and to the front axle modulator (400),
- a second air reservoir (25) for supplying a second supply pressure (225) to the PCM (200),
- a third air reservoir (35) for providing a third supply pressure (235) as pressure supply for the TCV (300),
- one or more wheel speed sensors (16, 26) for determining one or more respective wheel speeds at the front axle (10) and/or wheel speeds at the at least one rear axle (20),
- one or more brake pad wear sensors (17, 27) for determining one or more respective brake pad wear values at the front axle (10) and/or at the at least one rear axle (20),
- one or more pressure control valves, PCV, (18) at the front axle (10), each PCV (18) is configured to adjust a pressure at a respective wheel.

12. A vehicle, in particular a commercial vehicle configured to couple to at least one trailer, with a brake system according to any one of the preceding claims.

13. A method for a redundant pressure control in a commercial vehicle, **characterized by:**
- receiving (S110), by a foot brake module, FBM, (100), a brake request,
- generating (S120) a control pressure (101) at a pneumatic output port (110) of the FBM (100) based on the brake request;
- providing (S130), by a pressure control module, PCM, (200), a first channel output (201) at a first channel port (210) and a second channel output (202) at a second channel port (220); and
- controlling (S140), by a trailer control valve, TCV, (300), pneumatically a brake pressure of the trailer, in a primary mode, by the control pressure (101) and, in a secondary mode, controlling the brake pressure of the trailer based on an electronic brake signal (150) to a target value, the electronic brake signal (150) being an external brake request or being generated by the FBM (100).

14. The method of claim 13, wherein the steps of providing (S130) is performed as a primary mode and, if a malfunctioning prevents the primary mode of operation, the secondary mode of operation for the PCM (200) includes the steps of:
- pneumatically connecting a pneumatic backup port (230) of the PCM (200) with the first channel port (210) and/or to the second channel port (220);
- providing a pneumatic backup brake control based on the control pressure (101).
